# EUROPEAN PATENT SPECIFICATION

(11) **EP 3 347 391 B1**
(45) Date of publication and mention of the grant of the patent: **21.10.2020**
(21) Application number: 16767105.6
(22) Date of filing: 06.09.2016
(51) Int. Cl.: C08G 18/48, C08G 18/69, C08G 18/80, C08G 18/12, C09J 163/00

(54) **BLOCKED POLYURETHANE TOUGHENERS FOR EPOXY ADHESIVES**
BLOCKIERTE POLYURETHANZÄHIGKEITSVERMITTLER FÜR EPOXIDKLEBSTOFFE
DURCISSEURS À BASE DE POLYURÉTHANE BLOQUÉS POUR ADHÉSIFS ÉPOXY

(30) Priority: 10.09.2015 US 201562216399 P
(43) Date of publication of application: 18.07.2018
(73) Proprietor: Dow Global Technologies LLC, Midland, MI 48674 (US)
(72) Inventor: LUTZ, Andreas, CH-8810 Horgen (CH); SCHNEIDER, Daniel, CH-8810 Horgen (CH); GRUNDER, Sergio, CH-8810 Horgen (CH); KRISHNAN, Bindu, Freeport, TX 77541 (US)
(74) Representative: Beck Greener LLP
(86) International application number: PCT/US2016/050342
(87) International publication number: WO 2017/044402

(56) References cited:
- EP-A1- 1 728 825
- EP-A1- 1 916 270
- WO-A1-2014/072515

## Description

### FIELD OF THE INVENTION

The invention relates to tougheners for epoxy adhesives, and to methods of making and using the tougheners.

### INTRODUCTION

In the automotive industry, corrosion requirements relating to adhesively bonded joints are becoming more and more challenging. Typically a strength decrease of less than 40% is required after a cyclic climate storage of typically between 3 and 6 months.

Epoxy resins used in adhesives typically are strong, but tend to be brittle, which can compromise important strength requirements, such as impact peel strength and elastic moduli. Therefore, in order to meet strength requirements, e.g., as demanded in the automotive industry, epoxy adhesive formulations typically comprise reactive tougheners as additives.

Polyurethane (PU) type tougheners typically comprise polymerized polytetramethylene ether glycol (PTMEG) in which the tips have been modified with isocyanate and bisphenol to allow them to react with epoxy resin when curing conditions are obtained. In heat-curable adhesives, the isocyanate prepolymer may be protected by a capping group that dissociates from the PU-toughener when exposed to heat (curing conditions). PU-type tougheners do not confer suitable mechanical properties on their own, and in practice, automotive epoxy resin adhesives also include auxiliary tougheners comprising rubbery portions, such as polybutadiene or polyisoprene. However, these auxiliary tougheners are expensive.

U.S. Patent 8,404,787, Example 2, describes the synthesis of one type of reactive PU toughener additive. Other reactive and non-reactive toughener additives are commercially available and used in industry, e.g., the automobile industry.

U.S. Patent 7,557,168 (WO 2005/007766 A1) relates to a process for applying a streamable epoxy adhesive. The document describes the use of bisphenolic and monophenolic blocked PU toughener for adhesive formulations which are applied by jet streaming techniques. CNSL (cashew nut shell lipid) capping as we use it in this ICD is described. Apparently, no chain extension or use of PBD is described.

U.S. Patent 8,071,217 describes heat-curable epoxy resin compositions containing at least one epoxy resin A with, on average, more than one epoxide group per molecule, at least one curing agent B for epoxy resins, which is activated by an increased temperature, at least one terminally blocked polyurethane prepolymer of formula (I) and at least one epoxide-terminated polyurethane prepolymer of formula (II). The epoxy resin compositions are asserted to be particularly suitable for use as one-component, heat-curable adhesives and are characterized by excellent mechanical properties, high glass transition temperatures and high impact resistance.

U.S. Patent Pub. 2010/0310878 (family member of PCT/EP 2009/051084) relates to heat-curing epoxy resin compositions, which are used in particular as body shell adhesives for vehicle construction, and are asserted to have improved wash-out resistance, especially at temperatures around 60° C, and the viscosity of which at room temperature enables an application at room temperature. Example D1 of this document comprises a PU toughener which uses IPDI-PTMEG/PBD and CNSL blocking. Other tougheners are disclosed in, e.g., U.S. Patent 8,608,899 (related to EP 2128182) and U.S. Patent 8,829,122 (related to EP 2110397).

EP1916270 discloses heat-curable epoxy resin compositions containing at least one epoxy resin with, on average, more than one epoxide group per molecule, at least one curing agent for epoxy resins, which is activated by an increased temperature and at least one terminally blocked polyurethane prepolymer. Said epoxy resin compositions are particularly suitable for use as one-component, heat-curable adhesives and are characterized by excellent mechanical properties, high glass transition temperatures and high impact resistance.

EP1728825 relates to compound comprising an elastomeric prepolymer residue selected from the group of a polyurethane, a polyurea and a polyurea polyurethane having isocyanate end groups, the isocyanate end groups of said prepolymer residue being capped by a primary aliphatic, cycloaliphatic, heteroaromatic and/or araliphatic amine and/or a secondary aliphatic, cycloaliphatic, aromatic, heteroaromatic and/or araliphatic amine and/or a thiol and/or an alkyl amide and optionally by a phenol and/or a polyphenol. This compound can be used as a toughener in a curable composition.

In WO2014/072515 an impact modifier with epoxy group termination is described, comprising the reaction product of a) two or more polyols, b) one or more polyisocyanates and c) at least one epoxy resin comprising an epoxy compound containing a primary or secondary hydroxyl group, wherein the polyols comprise a1) at least one polyether polyol and a2) at least one OH-terminated rubber, where the weight ratio of polyether polyol to OH-terminated rubber is in the range from 7:3 to 2:8, as are an isocyanate-terminated prepolymer as a possible intermediate and processes for preparation thereof. The products obtained are suitable for improving the impact resistance of epoxy resin compositions, especially of 1K or 2K epoxy resin adhesives.

There remains a need for PU tougheners for epoxy adhesives, which tougheners confer desirable mechanical properties to the cured adhesive composition. There remains a need for PU tougheners for epoxy adhesives, which tougheners confer desirable corrosion resistance properties to the cured adhesive composition.

### SUMMARY OF THE INVENTION

It has been found that these and other benefits are provided by a capped PU toughener comprising both soft and rubbery units.

The present invention provides a composition suitable as a toughener in an epoxy adhesive, the composition comprising a material having the general formula:

R-(DI-PP₁-DI-BP-DI-PP₂-DI-CG)*ₙ* (A)

where:
PP₁ and PP₂ are residues of diols obtained from a mixture comprising as soft units polytetramethylene ether glycol (PTMEG) and as rubbery units polybutadiene-diol (PBD), the PBD in the mixture being 5 wt%-35 wt% relative to PTMEG and PBD;
DI is a residue of an aliphatic diisocyanate;
BP is a residue of a bisphenol;
CG is a residue of a capping group;
*n*=1-6; and
if *n*=1, then R is a CG, and if *n*=2-6, then R is a residue of a polyol with *n* hydroxy groups;
the material comprising a component of formula (A) in which PP₁ and PP₂ are not the same.

The present invention also provides a method of manufacturing a composition suitable as a toughener in an epoxy adhesive, the method comprising:
a) obtaining a first composition comprising PTMEG and PBD, the PBD being 5 wt% to 35 wt% relative to PTMEG and PBD;
b) preparing a second composition by reacting the first composition with an aliphatic diisocyanate in the presence of a catalyst;
c) preparing a third composition by reacting the second composition with a bisphenol; and
d) preparing a fourth composition by reacting the third composition with a first capping group.

### DETAILED DESCRIPTION OF THE INVENTION

Surprisingly, we found that the PU-toughener composition can play a very important role for corrosion resistance. The strength decrease is significantly lower than for comparative toughener compositions and the failure modes are dominantly cohesive failures. In addition we found that such formulated tougheners toughen the epoxy adhesive composition without the need of a secondary toughener like a CTBN-epoxy adduct or a core-shell rubber (or core shell rubber dispersion). This makes the formulation significantly simpler to prepare and less costly, and avoids the use of single sourced raw materials like CTBNs (HYCAR grades). The inventive formulation (e.g., adhesive compositions comprising the inventive toughener) show very good storage stability, in which is seen only small viscosity increases with time, which are temperature-dependent. Another surprising finding was that such toughener composition help to significantly improve the tackiness of the formulated adhesive to oily metal panels through improved oil absorption with time. Some of the inventive adhesive formulations which use the new toughener composition show a higher elastic modulus compared to the reference adhesive formulations. If using IPDI over HDI as isocyanate compound even higher moduli are achieved.

The inventive tougheners comprise both soft units and rubbery units. They are preferably tipped with diisocyanate and bisphenol, and preferably protected with capping groups. They can be described by the general formula (A):

R-(DI-PP-DI-BP-DI-PP-DI-CG)*ₙ* (A)

where:
PP is a residue of a diol obtained from a mixture of soft units (PTMEG) and rubbery units (polybutadiene-diol);
DI is a residue of an aliphatic diisocyanate;
BP is a residue of a bisphenol;
CG is a residue of a capping group;
*n*=1-6; and
if *n*=1, then R is a capping group (CG), and if *n*=2-6, then R is a residue of a polyol with *n* hydroxy groups.

A convenient way to produce the inventive toughener is by forming an isocyanate-terminated prepolymer comprising soft and rubbery units (PTMEG and PBD), and then reacting the remaining isocyanate groups with one or more capping groups. The isocyanate-terminated prepolymer may be prepared by reacting a mixture of soft- and rubber- prepolymers (PTMEG and PBD) with an excess of a polyisocyanate. Put another way, the reaction products of soft and rubbery units with diisocyanate results in formation of a polyurethane polyisocyanate because the isocyanate forms a urethane group with the soft and rubbery units, while the other isocyanate group remain unreacted. These polyisocyanates are then chain extended with a deficient amount of a polyphenol (e.g., bisphenol) to form a polyisocyanate that is a mix of chain extended soft (PTMEG-based) isocyanate, rubbery (PBD-based) isocyanate, and a mix thereof. These polyisocyanates are capped to form the inventive polyurethane toughener.

The prepolymer comprises, consists essentially of, or consists of, both soft units and rubbery units. Any ratio of soft to rubbery units may be used, and can be determined by one of skill in the art using the present specification as guidance. If the proportion of rubbery units is too high, e.g., above 40 wt%, the viscosity of the mixture increases leading to poor handling and more difficult processing. Also, a high rubber level (e.g., above 40 wt%) unexpectedly compromises mechanical properties of the cured adhesive. As a general matter, the rubbery units will comprise less than 40 wt%, more preferably less than 35 wt%, 30 wt% or 25 wt%, based on total weight of the soft and rubbery units. As a general matter, the rubbery units will comprise more than 5 wt%, more preferably more than 10 wt% or 15 wt%, based on total weight of the soft and rubbery units. Some preferred amounts include 15 wt% and 20 wt% rubbery units.

Regarding the soft units, any substituted or unsubstituted saturated alkane diol (or precursor thereof) may be used, preferably materials useful in epoxy tougheners. Some preferred sources of soft units include polytetrahydrofuran (polyTHF or PTMEG), polyethylene oxide (PEO), polypropylene oxide, polycarbonates, polycaprolactones, and mixtures of two or more thereof. According to the invention, soft units comprise, consist essentially of, or consist of, PTMEG. A material having suitable soft units, e.g., PTMEG, will be referred to as a soft component.

The soft component should have a sufficiently high molecular weight to confer strength to the cured epoxy adhesive, but not so high that processing and handling become difficult. As a general matter, the number-average molecular weight (Mn) of soft component (e.g., PTMEG) will be at least 1000 Da, 1500 Da, or 2000 Da. As a general matter, the molecular weight of soft component (e.g., PTMEG) will be up to 4000 Da, 3500 Da or 3000 Da. Some preferred molecular weights include 2000 Da and 2900 Da. Suitable soft component prepolymers (e.g., diols or polyols) are commercially available.

Regarding the rubbery units, any rubbery prepolymer is suitable. Some preferred rubbery prepolymers include difunctional (e.g., diol) polymers of rubbery monomers, such as polybutadiene (e.g., polybutadiene-diol) or of polyisoprene (e.g., polyisoprene-diol). According to the invention, Polybutadiene-diol (PBD) is used.

The rubber prepolymer should have a sufficiently high molecular weight to confer strength to the cured epoxy adhesive, but not so high that processing and handling become difficult. As a general matter, the molecular weight (Mn) of rubber units (e.g., PBD) will be at least 1000 Da, 1500 Da, or 2000 Da. As a general matter, the molecular weight of rubber units (e.g., PBD) will be up to 4000 Da, 3500 Da or 3000 Da. A preferred molecular weight includes 2800 Da. Suitable rubber prepolymers are commercially available.

Any polyisocyanate may be used, preferably a diisocyanate, more preferably an aliphatic diisocyanate. Preferred polyisocyanates include hexamethylene diisocyanate (HDI) and isophorone diisocyanate (IPDI). These and other suitable polyisocyanates are commercially available. Sufficient polyisocyanate should be used to ensure complete, or essentially complete, reaction of the tips of the hydroxy functional groups of the soft and rubbery groups and optional low Mw polyol. For this purpose, an excess of isocyanate may be used.

Any bisphenol may be used to prepare the inventive tougheners. Some suitable bisphenols include bisphenol A, bisphenol B, bisphenol C, bisphenol E, bisphenol AP (1,1-bis(4-hydroxylphenyl)-1-phenyl ethane), bisphenol F, bisphenol K, bisphenol M, tetramethylbiphenol and o,o'-diallyl-bisphenol A (ODBA), and the like. A liquid bisphenol (such as ODBA) is preferred because it is easier to dose and handle. These and other suitable bisphenols are commercially available. Bisphenol should be used in a deficient amount relative to isocyanate functional groups to ensure complete reaction of the hydroxy groups of the polyphenol, thereby obtaining a chain-extended isocyanate-terminated PU prepolymer.

Any capping group, preferably a mono-functional capping group, may be used in tougheners of the present invention. In general, the capping group protects the toughener from reacting prematurely (e.g., with components in an epoxy adhesive mixture) by capping the chain-extended isocyanate-tipped prepolymer. Under curing conditions, e.g., heat, the capping group dissociates from the toughener, freeing the isocyanate tip, and allowing it to react in the ongoing epoxidation (curing). As a general matter, the capping group can include one or more of a phenolic lipid, trimethylolpropane diglycidyl ether, a secondary amine, and an oxime. Capping groups in the inventive tougheners preferably comprise or consist of monophenolic capping groups.

Phenolic lipids are compounds comprising aliphatic substituted phenol. Preferred phenolic lipids include *m*-substituted phenols, where the substitution is a long chain (e.g., C₁₂-C₂₄) saturated or unsaturated aliphatic group. Preferred phenolic lipids include cardanol, which can be prepared from cashew nut shell oil (CNSL). Cardanol is commercially available, e.g., under the trade name Cardolite™ NC 700 or Cardolite™ NX2026.

Dimethylolpropane diglycidyl ether is also a suitable capping group. The product is generally available, or can be made, as a mixture of the di- and tri-glycidyl ethers, the latter of which does not function as a capping group. The product can be made by a person of ordinary skill in the art (e.g., per U.S. Patent 8,071,217), and is believed to be commercially available from Sigma Aldrich (product 430269, technical grade).

Preferred secondary amine capping groups include aliphatic secondary amines. Some preferred aliphatic secondary amines include diisopropylamine, dicyclohexylamine, and dioctylamine.

Any oxime suitable as a capping group may be used, preferably a ketoxime. Some preferred oximes include acetoneoxime; cyclohexanoneoxime; acetophenoneoxime; benzophenoneoxime; formamide oxime; methylethyl ketoxime; acetamide oxime; diacetylmonoxime; benzophenone oxime; cyclohexanone oxime; and 2-butanoneoxime. Acetoneoxime is preferred.

The inventive tougheners may comprise only one capping group, or they may comprise two, three, or more capping groups. When more than one capping group is used, they can be selected from one or more of the above categories of capping groups, and are preferably selected from different categories. All pairs and trios of the above categories are preferred, including each species named in each category. Some preferred pairs of capping groups include phenolic lipid (e.g., cardanol) and a secondary amine; and phenolic lipid and trimethylolpropane diglycidyl ether. A preferred trio of capping groups includes phenolic lipid, a secondary amine, and trimethylolpropane diglycidyl ether.

When two or more capping groups are used, the reactions can be carried out simultaneously or sequentially. Because of different reaction conditions and the possibility of side reactions, sequential reaction is preferred.

When only one capping group is used, the amount will generally be sufficient to ensure complete capping of the exposed isocyanate moieties. This will generally comprise a slight stoichiometric excess of the capping group, e.g., relative to the isocyanate tips on the PU-rubber prepolymer.

When two or more capping groups are used, all but the last capping group will generally be in used in amounts that are sufficiently sub-stoichiometric with respect to the exposed isocyanate moieties (or remaining exposed isocyanate moieties) to leave unreacted isocyanate moieties available for the next capping group. A sufficient amount of the final capping group is then used to ensure complete capping of the remaining exposed isocyanate moieties. This will generally comprise a slight stoichiometric excess of the final capping group with respect to the remaining exposed isocyanate moieties.

If desired, a polyol may also be included in the reaction mixture of soft component and rubber, leading to a branched soft-rubber toughener, rather than a linear soft-rubber toughener. It is within the scope of the present invention to use a diol (*n*=2), but a diol does not lead to branching. *If n* is too large, this could lead to solubility and processing problems. Preferred polyols have *n*=2-6, preferably *n*=3-6, more preferably 3. Preferably, *n* is an integer. Depending on amounts and combinations of polyol, *n* may take on non-integral values. Preferred polyols have molecular weight less than or equal to 500 Da, 250 Da, 180 Da, 150 Da, or 134 Da.

Any polyol suitable for use in this invention may be used. Some preferred triols include trimethylolpropane (TMP) (Mw=134 Da) and glycerin (Mw=92 da). Sugars (e.g., glucose; 180 Da) and sugar alcohols (e.g., mannitol; 182 Da) may also be used. TMP is preferred.

In general, any method may be used to prepare the inventive tougheners. The method may be a one-pot process or a multi-pot process. For reasons of efficiency and cost, one-pot processes are preferred.

In a preferred method, the selected amounts of soft component and rubber prepolymers are combined and mixed under vacuum. If a polyol is used, it would preferably be included in the initial mixture (comprising soft and rubbery polyols). The initial mixture is preferably heated to a suitable temperature, e.g., about 120° C, to remove water that may be present in the mixture.

The temperature of the mixture should be adjusted (if necessary) to a temperature suitable for reaction with diisocyanate, e.g., about 60° C. The selected diisocyanate(s) is added and the mixture allowed to react. In order to speed up the reaction, a suitable catalyst is preferably also used, and may be selected by one of ordinary skill in the art. The catalyst is preferably added after the diisocyanate has been sufficiently mixed into the prepolymer mixture. Upon addition of the catalyst, the reaction temperature may be adjusted (e.g., to 80°-90° C, or about 85° C). The reaction is preferably carried out under an inert atmosphere, e.g., nitrogen.

Preferred catalysts include tin II and tin IV compounds, preferably tin IV compounds. Examples of tin catalysts include dimethyltin dineodecanoate; dibutyltin diisooctylmaleate; di-n-butylbis(2,4 pentanedionate)tin; di-n-butylbutoxychlorotin; dibutyltin dilaurate; dioctyltin dilaurate; dimethylhydroxy(oleate)tin; tin II octoate; tin II neodecanoate; tin II oleate; and combinations of one or more thereof. The tin catalyst preferably comprises, more preferably consists essentially of, and more preferably consists of, dimethyltin dineodecanoate, dibutyltin dilaurate, dioctyltin dilaurate, or combinations thereof.

This first stage of the reaction process forms (optionally branched) isocyanate-tipped soft and rubber prepolymers.

In the second stage of the reaction, the selected bisphenol(s) is added to the reaction mixture. The temperature may be adjusted to promote and speed up the reaction process. Reaction temperatures of 90° to 110° C, or about 100° C, are preferred.

This second stage of the reaction process forms a mixture comprising the inventive (optionally branched) isocyanate-tipped soft-rubber prepolymer. Other components of this mixture include isocyanate-tipped prepolymer having only soft units, and isocyanate-tipped prepolymer having only rubber units.

In the third stage of the reaction, the capping group is added to the reaction mixture. The temperature may be adjusted to suit the particular capping group being added. Either a single capping group, or a mixture of capping groups, may be added to the mixture. When more than one capping group is added, it is preferred to add them sequentially rather than simultaneously. When two or more capping groups of the same category are used (e.g., two secondary amines), they can be added simultaneously, e.g., as a mixture.

When two or more capping groups are added sequentially, reaction conditions (e.g., temperature) may be adjusted with each capping group addition to make the reaction conditions more suitable for the particular capping group. Suitable reaction temperatures can be determined by one of ordinary skill in the art.

This third stage of the reaction process forms a mixture comprising the inventive toughener: a capped, isocyanate-tipped soft-rubber PU prepolymer. That is, the third stage provides a mixture comprising three types of components of formula (A): components in which the two PP groups are different (e.g., a soft unit and a rubbery unit, preferably a PTMEG unit and a PBD unit) and components in which the two PP groups are the same (e.g., two soft units and two rubbery units). When a polyol is added (e.g., when *n*>1, *n*=3-6, etc.) each branch of the compound may independently incorporate these combinations. The inventive material includes each of these components individually, preferably where the two PP groups are different (or different on at least one branch when *n*>1, *n*=3-6, etc.). The inventive material includes mixtures of two or three of these components, preferably mixtures including a component where the two PP groups are different.

Inventive adhesive compositions include mixtures of the inventive toughener, an epoxy resin, and a toughener. The inventive tougheners can be used in 1-component (1K) or 2-component (2K) epoxy adhesive compositions, preferably 1K compositions.

Epoxy resins useful in this invention include a wide variety of curable epoxy compounds and combinations thereof. Useful epoxy resins include liquids, solids, and mixtures thereof. Typically, the epoxy compounds are epoxy resins which are also referred to as polyepoxides. Polyepoxides useful herein can be monomeric (e.g., the diglycidyl ether of bisphenol A, diglycidyl ether of bisphenol F, digylcidyl ether of tetrabromobisphenol A, novolac-based epoxy resins, and tris-epoxy resins), higher molecular weight resins (e.g., the diglycidyl ether of bisphenol A advanced with bisphenol A) or polymerized unsaturated monoepoxides (e.g., glycidyl acrylates, glycidyl methacrylate, allyl glycidyl ether, etc.) to homopolymers or copolymers. Most desirably, epoxy compounds contain, on the average, at least one pendant or terminal 1,2-epoxy group (i.e., vicinal epoxy group) per molecule. Solid epoxy resins that may be used in the present invention can preferably comprise or preferably be mainly based upon Bisphenol A. For example, a preferred epoxy resin is diglycidyl ether of bisphenol A Dow Chemical DER 664 UE solid epoxy.

One preferable epoxy resin has general formula: 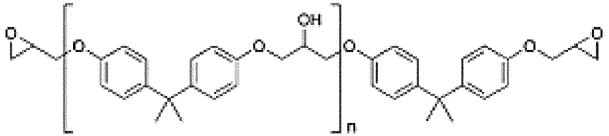 where *n* is generally in the range of 0 to about 25. Some basic liquid resins, e.g., D.E.R. 331, can have epoxy equivalent weights in the range of about 180-195 g/mol. Others, such as D.E.R. 332, can have epoxy equivalent weights in the range of about 170 to 175 g/mol.

Combinations of epoxy resins may be used to adjust properties of the epoxy adhesive.

In compositions and methods of the present invention, the epoxy adhesive may comprise any amount of epoxy resin. Preferably, the liquid and/or solid epoxy resin comprises more than 30 wt%, more preferably more than 40 wt% or 45 wt%, of the epoxy adhesive. Preferably, the liquid and/or solid epoxy resin comprises less than 70 wt%, more preferably less than 60 wt% or 55 wt%, of the epoxy adhesive. Some preferred amounts include 46 wt%, 47 wt%, 48 wt%, 49 wt%, 50 wt%, 51 wt%, 52 wt%, 53 wt%, and 54 wt%.

Any hardener (curing agent) appropriate for a one-component (1K) or two-component (2K) epoxy adhesive may be used. As is known in the art, a 1K epoxy adhesive contains all of the ingredients for the adhesive in a single composition, and does not cure until exposed to the appropriate conditions (e.g., heat or radiation), which activates the latent hardener. In a 2K epoxy adhesive, curing can take place at ambient conditions, such that the adhesive comprises at least two different compositions, which are kept separate until use.

The hardener, preferably for a 1K adhesive composition, preferably comprises a latent hardener. Any latent hardener that does not cause hardening under ambient conditions ("ambient conditions" meaning, e.g., typical room temperature and normal lighting conditions) may be used. A latent hardener that causes the epoxy adhesive to be curable by application of heat is preferred. Some preferred hardeners include dicyandiamide, imidazoles, amines, amides, polyhydric phenols, and polyanhydrides. Dicyandiamide (also known as DICY, dicyanodiamide, and 1- or 2-cyanoguanidine) is preferred. DICY (CAS 461-58-5) has empirical formula C₂N₄H₄, molecular weight 84, and structural formula:

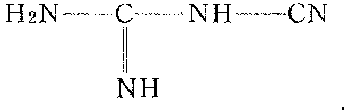

Any amount of hardener may be used as appropriate for any particular composition according to the present invention. The amount of hardener is preferably at least 2 wt%, more preferably at least 3 wt%, more preferably at least 4 wt% of the epoxy adhesive. The amount of epoxy hardener is preferably up to about 7 wt%, more preferably up to about 6 wt% of the epoxy adhesive.

When used, fillers may be present in any useful amount, and can be determined by those of ordinary skill in the art using this document as guidance. Typically, fillers may be present in amounts more than or about 3 wt%, more preferably more than or about 5 wt% of the epoxy adhesive. Fillers may be present in amounts less than or about 20 wt%, more preferably less than or about 15 wt% of the epoxy adhesive.

Products such as glass beads may be used to fill adhesive and/or as a spacer, e.g., to help control layer thickness of adhesive applied to a surface. The type and size of such products may be determined by one of ordinary skill in the art for the intended application. Some preferred products include Spheriglass (Potter Industries).

Optional fillers include mineral fillers, such as hollow glass spheres, calcium carbonate, calcium oxide, and talc. Fillers ensure good failure mode behavior, increased humidity resistance, improved corrosion resistance, increased modulus and/or superior processability. Calcium carbonate (e.g., sold under trade name OMYA®), which can be used to reduce shrinkage and increase corrosion resistance. Calcium oxide (e.g., sold under the trade name CHAUX VIVE) is a humidity scavenger that may help to preserve a partially-cured epoxy adhesive prior to final curing. Talc is available, e.g., under the trade name MISTROFIL® or SIERALITE®, and aluminum magnesium silicate (wollastonite) is available, e.g., under the trade name NYAD® 200. Silica, preferably hydrophobic fumed silica may also be used, such as AEROSIL R202 or AEROSIL R805. Some preferred hollow glass spheres include Glass Bubbles (3M).

Thixotropic agents and other viscosity regulators may also be optionally used. One such preferred example includes fumed silica (e.g., sold under the trade name Aerosil®). A preferred thixotropic agent that also improves wash-off resistance is a mixture of polyester and liquid epoxy resin (LER), such as Dynacol (25% polyester 7330 and 75% LER 330).

Castor oil wax with polyamides may also be used, and are commercially available from Rockwood under the trade name Rheotix, e.g., Rheotix 240. Other suitable gelling agents include Luvotix grades (like Luvotix HT) supplied from Lehmann, and Voss which is a polyamide without the wax or Disparlon grades supplied from Kusumoto Chemicals Ltd.

When used, fumed silica may be present in amounts more than or about 2 wt%, preferably more than or about 6 wt% of the epoxy adhesive. Fumed silica may be present in amounts less than or about 15 wt%, more preferably less than or about 12 wt% of the epoxy adhesive.

Reactive and non-reactive diluents may also optionally be used. A preferred reactive diluent is a monoglycidyl ester of neodecanoic acid, which also can act as a viscosity-reducing agent. It is commercially available, e.g., under the trade name Erisys GS-110.

One or more curing accelerators (catalysts) may be optionally used to, e.g., modify the conditions under which a latent catalyst becomes catalytically active. For example, when a high-temperature latent hardener such as DICY is used, e.g., in a heat-curable epoxy adhesive, a curing accelerator can be optionally used to reduce the temperature at which DICY becomes catalytically active. Inclusion of a curing accelerator may convert a 1K adhesive to a 2K adhesive. A preferred curing accelerator for a heat-curable epoxy adhesive includes a tertiary polyamine embedded in a polymer matrix. A preferred example is 2,4,6-tris(dimethylaminomethyl)phenol integrated into a poly(p-vinylphenol) matrix, or Rezicure matrix such as described in U.S. Patent No. 4,659,779 (and its family members U.S. Patent Nos. 4,713,432 and 4,734,332; and EP-A-0 197 892).

When used, curing accelerator may be present in any amount that suitably adjusts the activation condition of latent catalyst. Preferably, a curing accelerator may be present in amounts more than or about 0.2 wt%, more preferably more than or about 0.5 wt% of the epoxy adhesive. Preferably, curing accelerator may be present in amounts less than or about 5 wt%, more preferably less than or about 2 wt% of the epoxy adhesive.

At least one adhesion promoter may also be optionally used. Preferred adhesion promotes include epoxy silanes, e.g., sold under the trade name Silquest™ A-187.

At least one surfactant or wetting agent may be optionally used. A preferred wetting agent is a non-ionic fluorinated polymer. Such agents are also preferably capable of absorbing residual oils (e.g., manufacturing and processing oils) on metal surfaces, thereby facilitating adhesion to metal surfaces.

At least one aliphatic phenol may also be optionally used, preferably a phenol derivative with an aliphatic group in the meta-position, e.g., cardanol. Such compounds promote adhesion and corrosion resistance. Cardanol is commercially available, e.g., under the trade name Cardolite™ NC 700.

Other additives may also be used. Some non-limiting examples of other additives include flexbilized epoxy resins such as fatty acid epoxy adducts, gelling compounds such as polyester or PVB, and flame retardants such as aluminium-tris-hydroxide. Pigments or coloring agents, e.g., Irgalite® green, may also be used.

Plasticizers may be employed in compositions of the present invention, but preferably only in small amounts as they tend to decrease Tg. Plasticizers include sulfonates, phosphate esters, sulfonamides, glycerin triesters, dialkyl esters of aliphatic dicarboxylic acids, glycol esters of benzoic acid, and mixtures of one or more thereof. If used, plasticizers are preferably kept to less than 0.1 wt%.

The present invention provides epoxy adhesives that may be used on a variety of surfaces. Some suitable materials include metals (e.g., aluminum, steel), thermoplastic polymers (e.g., polyethylenes, polypropylenes, polyurethanes, acrylics, and polycarbonates, including copolymers, terpolymers, etc.), thermoset polymers (e.g., vulcanized rubber, ureaformaldehyde foams, melamine resins), wood, carbon fiber composites (CFC), glass fiber composites (GFC), and other composites. The epoxy adhesives may be used to bond identical materials (e.g., steel and steel), similar materials (e.g., steel and aluminum) or dissimilar materials (e.g., CFC/steel; CFC/aluminum; polycarbonate/vulcanized rubber; or aluminum/wood). Other combinations of these and other materials are also suitable.

Epoxy adhesives according to the present invention are suitable for use in industrial e-coating processes, e.g., in the automotive assembly industry. Complete knock down (CKD) methods of assembly are included in the present invention. The present invention includes the epoxy adhesive in the uncured state (whether, e.g., 1K or 2K), and in the cured state. The present invention includes products bonded with epoxy adhesives according to the present invention.

The invention includes the inventive tougheners, methods of making the inventive tougheners, adhesives comprising the inventive tougheners, methods of using the tougheners and products (e.g., adhesive compositions) comprising them, as well as cured inventive adhesives and products comprising them.

### EXAMPLES

Table 1 shows raw materials used in the exemplary adhesive formulations and Table 2 the raw materials used in the exemplary toughener syntheses.

**Table 1**

| | Supplier | Chemistry |
|---|---|---|
| DER 331 | Dow | Liquid DGEBA resin |
| *Solid-liquid epoxy resin mix | Dow | Solid DGEBA resin |
| D.E.N. 438 | Dow | Epoxy-Novolac |
| D.E.R. 734 | Dow | Reactive diluent |
| Sec.-amine capped PU polymer (RAM DIPA) | | US 8,404,787 B2: example 2 |
| Bis A capped PU polymer (RAM F) | | WO 2005/007766 A1, preparation of toughener B |
| Struktol 3604 | S&S Schill & Seilacher | X8 CTBN-LER adduct: 60:40 |
| Epoxy silane | Momentive | Silquest A 187 |
| colorant | Huntsman | Color pigment paste |
| Amicure CG 1200 | Airproducts | dicyandiamide |
| Curing accelerator: tris-2,4,6-(dimethylaminomethyl)-phenol embedded into a novolac polymer matrix | | US 2013/0090431 A1: describes a curing accelerator technology which is used in the examples below. Example 5 of the patent describes the used curing accelerator. |
| Omicure U52 | Emerald | Urea curing accelerator |
| Omya BSH | Omya | calcium carbonate |
| Talc IN | IMCD Deutschland | |
| Chaux Vive | Lhoist | calcium oxide |
| K25 | 3M | Hollow glass spheres |
| Fumed silica | Evonik | Like Aerosil 202 |

| | | |
|---|---|---|
| * DGEBA epoxy resin mix: DER 330:DER 671 = 60:40 by weight | | |

**Table 2**

| Comp. | | Supplier | Chemistry |
|---|---|---|---|
| a | PolyTHF 2000 | BASF | Polytetrahydrofuran-diol 2000g/mol |
| b | Terathane 2900 | Invista | Polytetrahydrofuran-diol 2900g/mol |
| c | PolyBD R45 HTLO | Cray Valley | Polybutadiene-diol 2800g/mol |
| d | Desmodur H | Bayer | 1,6-Hexamethylenediisocyanate |
| e | Desmodur I | Bayer | Isophoronediisocyanate |
| f | Homid 127A | HOS | o,o'-diallylbisphenol A |
| g | Bisphenol M | Sigma Aldrich | Bisphenol M |
| h | Bisphenol A | VWR | Bisphenol A |
| i | Cardolite NC 700 | Carolite | Cardanol |
| j | DIPA | VWR | Diisopropylamine |
| k | DICHA | VWR | Dicyclohexylamine |
| l | DOA | VWR | Dioctylamine |
| m | MHR | Sigma Aldrich | Trimethylolepropane di-/tri-glycidylether |
| n | Acetoneoxime | VWR | Acetone oxime |
| o | Trimethylolpropane | VWR | Trimethylolpropane |
| p | Dabco T12 N | Air Products | Dibutyltindilaurate |

### Example 1: Inventive Tougheners

The identities and amounts of various components used in Example 1 are provided in Tables 3a and 3b. A blank in the Tables indicates the component is not used (0 wt%) in the corresponding Example.

**Table 3a**

| **Comp.** | **Raw materials** | **A** | **B** | **C** | **D** | **E** | **F** | **G** | **I** | **J** | **K** | **L** | **M** | **N** | **O** | **P** | **Q** |
|---|---|---|---|---|---|---|---|---|---|---|---|---|---|---|---|---|---|
| | | **Inv** | **Inv** | **Inv** | **Inv** | **Inv** | **Inv** | **Inv** | **Inv** | **Inv** | **Inv** | **Inv** | **Inv** | **In v** | **Inv** | **Inv** | **Inv** |
| | Comment | 20% PBD | 20% PBD | 20% PBD | 20% PBD | 20% PBD | 20% PBD | 20% PBD | 20% PBD | 20% PBD | 20% PBD | 20% PBD | 20% PBD | 20% PBD | 20% PBD | 20% PBD | 20% PBD |
| a | PTMEG 2000 | 54.79 | 54.63 | | 57.58 | 57.18 | 59.46 | 55.94 | 62.61 | 55.15 | 57.12 | 55.01 | 58.69 | 61.63 | 48.76 | 51.57 | 53.26 |
| b | PTMEG 2900 | | | 65.67 | | | | | | | | | | | | | |
| f | ODBA | 5.74 | | 4.74 | 5.74 | 5.99 | 6.23 | 5.86 | 6.24 | 5.78 | 5.98 | 5.77 | 6.16 | 6.15 | 5.12 | 5.41 | 5.58 |
| g | Bis M | | 6.01 | | | | | | | | | | | | | | |
| c | PBD | 13.67 | 13.63 | 11.29 | 14.39 | 14.27 | 14.84 | 13.96 | 15.65 | 13.76 | 14.25 | 13.73 | 14.66 | 15.41 | 12.18 | 12.86 | 13.29 |
| d | HDI | | | 9.43 | 11.65 | | 12.39 | | 12.67 | | 11.90 | | | 12.47 | | | |
| e | IPDI | 15.09 | 15.05 | | | 15.75 | | 15.40 | | 15.19 | | 15.15 | 16.14 | | 13.41 | 14.20 | 14.67 |
| i | CNSL | 10.65 | 10.62 | 8.81 | 10.58 | | | | | 9.65 | 10.00 | 9.63 | | | | 5.02 | 5.19 |
| j | DIPA | | | | | | | | | 0.41 | 0.69 | | 4.29 | 4.28 | | | |
| k | DICHA | | | | | 6.75 | 7.02 | | | | | 0.65 | | | | | 1.25 |
| l | DOA | | | | | | | 8.78 | | | | | | | | | |
| m | MHR | | | | | | | | | | | | | | 20.47 | 10.88 | 6.70 |
| n | Oxim | | | | | | | | 2.77 | | | | | | | | |
| p | DABCO T12N | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 | 0.06 |
| | Total: | 100 | 100 | 100 | 100 | 100 | 100 | 100 | 100 | 100 | 100 | 100 | 100 | 100 | 100 | 100 | 100 |

**Table 3b**

| **Comp.** | **Raw materials** | **R** | **S** | **I: A no PBD** | **II: D no PBD** | **III** | **IV** |
|---|---|---|---|---|---|---|---|
| | | **Inv** | **Inv** | **Ref** | **Ref** | **Ref** | **Ref** |
| | Comment | 20% PBD | 20% PBD | No PBD | No PBD | RAMF | RAM DIPA |
| a | PTMEG 2000 | 53.51 | 55.47 | 68.55 | 71.22 | 68.95 | 79.31 |
| b | PTMEG 2900 | | | | | | |
| f | ODBA | 5.61 | 5.81 | 5.68 | 5.90 | | |
| h | Bis A | | | | | 17.97 | |
| c | PBD | 13.35 | 13.84 | | | | |
| d | HDI | | 11.55 | | 11.99 | 12.71 | 13.29 |
| e | IPDI | 14.74 | | 15.24 | | | |
| i | CNSL | 5.21 | 5.40 | 10.47 | 10.83 | | |
| j | DIPA | 0.79 | 0.82 | | | | 6.80 |
| k | DICHA | | | | | | |
| l | DOA | | | | | | |
| m | MHR | 6.73 | 7.05 | | | | |
| o | TMP | | | | | 0.35 | 0.54 |
| p | DABCO T12N | 0.06 | 0.06 | 0.06 | 0.06 | 0.02 | 0.06 |
| | Total: | 100 | 100 | 100 | 100 | 100 | 100 |

1. First reaction step: x wt% of component ***[a], [b]*** and ***[c]*** are added into a lab reactor and heated to 120° C. Mix the mixture for 30 min at 120° C under vacuum. Cool the mixture to 60° C, add x wt% of components ***[d]*** and ***[e]***, and let it mix for 2 minutes. Add x wt% of component ***[p]*** and allow the mixture to react at 85° C (bath temperature) for 45 minutes under nitrogen.
2. Second reaction step: x wt% of component ***[f], [g]*** and ***[h]*** are added to the mixture of step 1, and the mixture is stirred for 120 min under vacuum at 100° C [bath temperature].
3.1 Third reaction step: (for toughener with a the single capping group ***[i]*** or ***[m]***; Toughener A, B, C, D, O and P). X wt% of component [i] or [m] are added to the mixture of step 2 and the mixture is stirred for 180 min under vacuum at 105° C [bath temperature] to obtain the indicated inventive tougheners.
3.2 Third reaction step: (for toughener with a the single capping group ***[k],[l]*** or ***[n]***; Toughener E,F,G and I). X wt% of component ***[k], [l]*** or ***[n]*** are added to the mixture of step 2 and the mixture is stirred for 30 min at 100° C [bath temperature]. The vacuum is set, and the mixture is allowed to mix for additional 15 min at 100° C [bath temperature] to obtain the indicated inventive tougheners.
3.3 Third reaction step: (for toughener with a the single capping group ***[j]***; Toughener M and N). The mixture of step 2 is cooled to 55° C. X wt% of component ***[j]*** is added and the mixture is stirred for 30 min at 85° C [bath temperature]. The vacuum is set, and the mixture allowed to mix for an additional 15 min at 85° C [bath temperature] to obtain the indicated inventive tougheners.
3.4 Third reaction step: (for toughener with multiple capping groups; Toughener J,K,L,R, Q, and S). X wt% of component ***[i]*** is added and the mixture is stirred for 180 min under vacuum at 105° C [bath temperature].
4.1 Fourth reaction step: (for toughener with the second capping group ***[j]**.* Toughener J,K). Cool the mixture of step 3.4 to 55° C. Then add x wt% of component ***[j]*** and the mixture is stirred for 30 min at 85° C [bath temperature]. The vacuum is set and the mixture allowed to mix for additional 15 min at 85° C [bath temperature] to obtain the indicated inventive tougheners.
4.2 Fourth reaction step: (for toughener with the second capping group ***[k].*** Toughener L). X wt% of component ***[k]*** is added to the mixture of step 3.4 and the mixture is stirred for 30 minutes at 100° C [bath temperature]. The vacuum is set and the mixture is allowed to mix for an additional 15 min at 100° C [bath temperature] to obtain the indicated inventive tougheners.
4.3 Fourth reaction step: (for toughener with the second capping group ***[m]*** and a additional third capping group. Toughener Q, R and S). X wt% of component ***[m]*** is added and the mixture is stirred for 180 minutes under vacuum at 105° C [bath temperature] to obtain the indicated inventive toughener, which can be further reacted as follows:
5.1 Fifth reaction step: (for toughener with third capping group ***[k].*** Toughener Q). Add x wt% of component ***[k]*** to the mixture of step 4.3, and the mixture is stirred for 30 min at 100° C [bath temperature]. The vacuum is set and the mixture allowed to mix for an additional 15 minutes at 100° C [bath temperature] to obtain the indicated inventive tougheners.
5.2 Fifth reaction step: (for toughener with third capping group ***[j]***. Toughener R and S). Cool the mixture to 55° C. Then add x wt% of component ***[j]*** and the mixture is stirred for 30 minutes at 85° C [bath temperature]. A vacuum is set and the mixture allowed to mix for an additional 15 min at 105° C [bath temperature] to obtain the indicated inventive tougheners.

At the end of the synthesis of each of the tougheners, a sample is taken for NCO determination. The NCO content should be less than 0.4%.

All of the exemplary inventive tougheners are similarly composed. In each case a combination of polyether-diol with polybutadiene-diol is used as polyol backbone and a polyphenol as chain extender. The isocyanate-terminated polymer is formed by using either HDI or IPDI as isocyanate component. A main difference is in the capping group, which could be a single capping group, or a combination of several (e.g., two or three) three chemically different capping groups.

Inventive toughener compositions A to D use CNSL as capping group to cap the isocyanate-terminated polymer. Tougheners A, B and D use PTMEG 2000 as polyol component. Toughener C uses PTMEG 2900. Toughener B uses Bis M as chain extender instead of ODBA. Tougheners E to G use sec-amines as capping groups. Tougheners E and F are similar but differ in the use of the isocyanate. Toughener G is similar to toughener E, but uses a different amine for capping. Toughener I is similar to toughener F, but uses an oxime as capping group instead of a sec-amine. Tougheners J to L use a combination of CNSL and sec-amines for capping. Tougheners J and K differ in the use of IPDI or HDI as isocyanate compound. Toughener L is similar to toughener J but uses DICHA instead of DIPA, in addition to CNSL as capping group. Tougheners M and N only use sec-amines (DIPA) as capping group. Toughener N uses HDI and toughener M uses IPDI as isoyanate building block. Toughener O uses a hydroxyl-epoxy resin as capping group. Toughener P uses a combination of monohydroxy epoxy resin and a sec-amine as capping group. Toughener Q uses three different capping groups, MHR, sec-amine and a CNSL. Toughener R is similar to Q but uses a different sec-amine, DIPA vs DICHA. Toughener S is similar to toughener R but used HDI instead of IPDI as isocyanate component.

### Example 2: Comparative Tougheners I and II

The identities and amounts of various components used in Example 2 are provided in Table 3b.
1. First reaction step: x wt% of component ***[a]*** is added into a lab reactor and heated to 120° C. Mix the mixture for 30 min at 120° C under vacuum. Cool the mixture to 60° C, add x wt% of component ***[d]*** and ***[e]*** and let it mix for 2 minutes. Add x wt% of component ***[p]*** and allow the mixture to react at 85° C (bath temperature) for 45 minutes under nitrogen.
2. Second reaction step: x wt% of component ***[f]*** is added to the mixture of step 1, and the mixture is stirred for 120 min under vacuum at 100° C [bath temperature].
3. Third reaction step: (for toughener with a the single capping group ***[i]***: Toughener I and II (similar to A and B, respectively, but with no PBD)). X wt% of component ***[i]*** is added to the mixture of step 2, and the mixture is stirred for 180 min under vacuum at 105° C [bath temperature].

At the end of all toughener preparations, take a sample for NCO determination. NCO should be lower then 0.4%.

### Example 3: Comparative Toughener III

The identities and amounts of various components used in Example 3 are provided in Table 3b.

X wt% of component ***[a], [h] and [o]*** are added to a lab reactor and heated to 120° C. Mix the mixture for 30 min at 120° C under vacuum. Cool the mixture 60° C and add x wt% of component ***[d]*** and let it mix for 2 min. Add x wt% of component ***[p]*** and the mixture is allowed to react at 85° C (bath temperature) for 45 minutes under nitrogen. Set a vacuum and let the mixture mix for additional 15 min under reduced pressure.

Take a sample for NCO determination. NCO should be 0.0%.

### Example 4: Comparative Toughener IV

The identities and amounts of various components used in Example 4 are provided in Table 3b.

First reaction step: X wt% of component ***[a]*** and ***[o]*** are added to a lab reactor and heated to 120°C. Mix the mixture for 30 min at 120° C under vacuum. Cool the mixture to 60° C, add x wt% of component ***[d]*** and let it mix for 2 min. Add x wt% of component ***[p]*** and the mixture is allowed to react at 85° C (bath temperature) for 45 minutes under nitrogen.

Second reaction step: Cool the mixture to 55° C. Add x wt% of component ***[j]*** and the mixture is stirred for 30 min at 85° C [bath temperature]. A vacuum is set and the mixture allowed to mix for additional 15 min at 85° C [bath temperature] to obtain the indicated reference toughener.

A sample is taken for NCO determination. NCO content should be 0.0%.

The reference toughener compositions are similarly composed like the inventive tougheners, but are missing the rubbery fliexible portion, e.g., the polybutadiene-diol, as polyol building block in the backbone. Reference toughener compositions I and II are similar to inventive toughener A and D but do not use PBD. Reference toughener III and IV use toughener as described in the patents US 7,557,168 B2 (WO 2005/007766 A1) and US 8,404,787 B2. Reference toughener III uses the sec-amine DIPA and IV uses Bis A as capping compound.

### Example 5: Adhesives

Inventive adhesive formulations F1-F19, and comparative adhesive formulations FA-FD, are prepared by mixing the ingredients and amounts as shown in Tables 4a and 4b.

**Table 4a**

| | **F1** | **F2** | **F3** | **F4** | **F5** | **F6** | **F7** | **F8** | **F9** | **F10** | **F12** | **F13** | **F14** | **F15** | **F16** |
|---|---|---|---|---|---|---|---|---|---|---|---|---|---|---|---|
| DER 331 | 33.46 | 33.96 | 26.73 | 31.97 | 34.4 | 34.36 | 34.95 | 33.46 | 33.96 | 33.46 | 33.96 | 33.46 | 33.46 | 33.96 | 33.96 |
| *Solid-liquid epoxy resin mix | 18.5 | 14.41 | 19.54 | 19.54 | 19.5 | 18.5 | 18.32 | 18.5 | 14.41 | 18.5 | 14.41 | 18.5 | 18.5 | 14.41 | 14.41 |
| D.E.N. 438 | 0 | 2.98 | 0 | 0 | 0 | 0 | 0 | 0 | 0 | 0 | 2.98 | 0 | 0 | 2.98 | 2.98 |
| D.E.R. 734 | 0 | 2 | 0 | 0 | 0 | 0 | 0 | 0 | 0 | 0 | 2 | 0 | 0 | 2 | 2 |
| A | 20 | 19.45 | 18.54 | 18.54 | 0 | 0 | 0 | 0 | 0 | 0 | 0 | 0 | 0 | 0 | 0 |
| B | 0 | 0 | 0 | 0 | 19 | 0 | 0 | 0 | 0 | 0 | 0 | 0 | 0 | 0 | 0 |
| C | 0 | 0 | 0 | 0 | 0 | 0 | 0 | 0 | 6 | 0 | 0 | 0 | 0 | 0 | 0 |
| D | 0 | 0 | 0 | 0 | 0 | 19 | 18.81 | 0 | 6 | 0 | 0 | 0 | 0 | 0 | 0 |
| E | 0 | 0 | 0 | 0 | 0 | 0 | 0 | 20 | 0 | 6 | 0 | 0 | 0 | 0 | 0 |
| F | 0 | 0 | 0 | 6 | 0 | 0 | 0 | 0 | 19.45 | 0 | 0 | 0 | 0 | 0 | 0 |
| G | 0 | 0 | 0 | 0 | 0 | 0 | 0 | 0 | 0 | 20 | 0 | 0 | 0 | 0 | 0 |
| H | 0 | 0 | 0 | 0 | 0 | 6 | 0 | 0 | 0 | 0 | 0 | 0 | 0 | 0 | 0 |
| I | 0 | 0 | 0 | 0 | 0 | 6 | 0 | 0 | 0 | 0 | 19.45 | 0 | 0 | 0 | 0 |
| J | 0 | 0 | 0 | 0 | 6 | 0 | 0 | 0 | 0 | 0 | 0 | 20 | 0 | 0 | 0 |
| K | 0 | 0 | 0 | 6 | 0 | 0 | 0 | 0 | 0 | 0 | 6 | 0 | 20 | 0 | 0 |
| L | 6 | 0 | 0 | 0 | 0 | 6 | 0 | 0 | 0 | 0 | 0 | 0 | 0 | 0 | 0 |
| M | 0 | 0 | 0 | 0 | 0 | 6 | 0 | 0 | 0 | 0 | 0 | 0 | 0 | 19.45 | 0 |
| N | 0 | 0 | 0 | 0 | 0 | 0 | 0 | 0 | 0 | 0 | 0 | 0 | 0 | 0 | 19.45 |
| Epoxy silan | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| colorant | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 |
| Amicure CG 1200 | 5.44 | 4.62 | 3.81 | 4.28 | 4.5 | 5.54 | 5.54 | 5.44 | 4.62 | 5.44 | 4.62 | 5.44 | 5.44 | 4.62 | 4.62 |
| EP 796 | 0.8 | 0.79 | 0 | 0 | 0 | 0.8 | 0 | 0.8 | 0.79 | 0.8 | 0.79 | 0.8 | 0.8 | 0.79 | 0.79 |
| Omicure U52 | 0 | 0 | 0.8 | 0.8 | 0.8 | 0 | 0.79 | 0 | 0 | 0 | 0 | 0 | 0 | 0 | 0 |
| Omya BSH | 7 | 6.98 | 15.03 | 10.02 | 7 | 7 | 6.93 | 7 | 6.98 | 7 | 6.98 | 7 | 7 | 6.98 | 6.98 |
| Talk 1N | 0.3 | 0.3 | 0 | 0.3 | 0.3 | 0.3 | 0.3 | 0.3 | 0.3 | 0.3 | 0.3 | 0.3 | 0.3 | 0.3 | 0.3 |
| Chaux Vive | 6.5 | 6.46 | 6.51 | 6.51 | 6.5 | 6.5 | 6.44 | 6.5 | 6.46 | 6.5 | 6.46 | 6.5 | 6.5 | 6.46 | 6.46 |
| K25 | 2 | 2.09 | 3.01 | 2 | 2 | 2 | 1.98 | 2 | 2.09 | 2 | 2.09 | 2 | 2 | 2.09 | 2.09 |
| Fumed silica | 5 | 4.97 | 5.01 | 5.01 | 5 | 5 | 4.95 | 5 | 4.97 | 5 | 4.97 | 5 | 5 | 4.97 | 4.97 |
| Total: | 100 | 100 | 100 | 100 | 100 | 100 | 100 | 100 | 100 | | | | | | |

| | | | | | | | | | | | | | | | |
|---|---|---|---|---|---|---|---|---|---|---|---|---|---|---|---|
| *DGEBA epoxy resin mix: DER 330:DER 671 = 60:40 by weight | | | | | | | | | | | | | | | |

**Table 4b**

| | **F17** | **F18** | **F19** | **FA** | **FB** | **FC** | **FD** |
|---|---|---|---|---|---|---|---|
| DER 330 | 31.75 | 32.42 | 32.41 | 34.4 | 34.4 | 30.3 | 35.3 |
| *Solid-liquid epoxy resin mix | 18.5 | 18.5 | 18.5 | 19.5 | 19.5 | 18.5 | 18.5 |
| D.E.N. 438 | 0 | 0 | 0 | 0 | 0 | 0 | 0 |
| D.E.R. 734 | 0 | 0 | 0 | 0 | 0 | 0 | 0 |
| P | 21.45 | 0 | 0 | 0 | 0 | 0 | 0 |
| Q | 0 | 0 | 0 | 0 | 0 | 0 | 0 |
| R | 0 | 20.89 | 0 | 0 | 0 | 0 | 0 |
| S | 0 | 0 | 20.89 | 0 | 0 | 0 | 0 |
| A but no PBD (ref) | 0 | 0 | 0 | 19 | 0 | 0 | 0 |
| D but no PBD (ref) | 0 | 0 | 0 | 0 | 19 | 0 | 0 |
| RAM DIPA | 0 | 0 | 0 | 0 | 0 | 0 | 18 |
| RAM F | 0 | 0 | 0 | 0 | 0 | 14.5 | 0 |
| Struktol 3604 | 0 | 0 | 0 | 0 | 0 | 9 | 0 |
| Epoxy silane | 0.6 | 0.6 | 0.6 | 0.6 | 0.6 | 0.6 | 0.6 |
| Colorant | 0.4 | 0.4 | 0.4 | 0.4 | 0.4 | 0.4 | 0.4 |
| Amicure CG 1200 | 5.7 | 5.59 | 5.6 | 4.5 | 4.5 | 5.1 | 5.6 |
| EP 796 | 0.8 | 0.8 | 0.8 | 0 | 0 | 0.8 | 0.8 |
| Omicure U52 | 0 | 0 | 0 | 0.8 | 0.8 | 0 | 0 |
| Omya BSH | 7 | 7 | 7 | 7 | 7 | 7 | 7 |
| Talk IN | 0.3 | 0.3 | 0.3 | 0.3 | 0.3 | 0.3 | 0.3 |
| Chaux Vive | 6.5 | 6.5 | 6.5 | 6.5 | 6.5 | 6.5 | 6.5 |
| K25 | 2 | 2 | 2 | 2 | 2 | 2 | 2 |
| Fumed silica | 5 | 5 | 5 | 5 | 5 | 5 | 5 |
| Total: | **100** | **100** | **100** | **100** | **100** | **100** | **100** |

Inventive adhesive formulations F1 to F19 comprise inventive tougheners described above. The adhesive formulations mainly differ in the toughener composition and in the use of different curing accelerators. The toughener compositions differ in the isocyanate (HDI vs IPDI) and the capping group(s). None of the formulations uses any auxiliary toughening or flexibilizing component such as CTBN rubber epoxy adducts or core shell rubber dispersions.

Reference adhesive formulations FA to FD comprise reference tougheners that do not comprise polybutadiene-diol in their backbones. The reference tougheners are also capped differently. Reference adhesive formulation FI compises reference toughener I (similar to inventive toughener A but no PBD) and reference adhesive formulation FII (similar to inventive toughener D but no PBD) comprises reference toughener II. None of these two formulations uses any PBD in the toughener backbone, nor any auxiliary toughener in the adhesive formulation. Reference formulation FIII uses a toughener which is described in WO 2005/007766 A1, preparation of toughener B, and a CTBN-epoxy adduct as co-toughener. Reference adhesive formulation FIV uses a toughener which is described in US 8,404,787 B2: example 2, but uses no co-toughener in addition.

The adhesives are tested by the following methods:
Rheology of the uncured adhesives: Rotatory viscosity/yield stress are tested on a Bohlin CS-50 Rheometer, C/P 20, up/down 0.1-20s/1; evaluation according to Casson model.

Mechanical Testing of cured adhesives: Hot dipped zinc coated steel: DX56D+Z100, substrate thickness 0.75 mm and electrolytically zinc-coated steel DC04A ZE75/75+P as supplied by, for example, Thysssen Krupp.
- Lap shear strength may be tested by following DIN EN 1465: 10x25 mm bonded area, 0.2 mm adhesive layer thickness
- Lap shear testing after P1210 cyclic corrosion test: P1210 1 day = 4 hours salt spray (35° C/100% r.h. at 5% NaCl solution) + 4 hours 23° C/50% r.h. + 16 hours 40° C/100% r.h.
- Impact peel strength may be tested following ISO 11343: 20x30 mm bonded area, 0.2 mm adhesive layer thickness
- Modulus tested may be tested following DIN EN ISO 527-1

For purposes of testing, adhesives are cured for 30 minutes in an oven set at 180° C.

Tables 5a and 5b summarize the test results for viscosity and for mechanical testing, including:
- Casson viscosity data are presented for viscosity and viscous yield stress
- bulk adhesive performance: elastic modulus-tensile strength and elongation at break
- mechanical strength values for lap shear and impact peel tests
- lap shear strength performance before and after aging.

**Table 5a**

| | **F1** | **F2** | **F3** | **F4** | **F5** | **F6** | **F7** | **F8** | **F9** | **F10** | **F12** | **F13** | **F14** | **F15** | **F16** |
|---|---|---|---|---|---|---|---|---|---|---|---|---|---|---|---|
| **Initial rheological data** | | | | | | | | | | | | | | | |
| Viscosity, Casson, 45°C [Pas] | 83 | 73 | 88 | 68 | 62 | 95 | 80 | 60 | 80 | 53 | 54 | 57 | 108 | 49 | 73 |
| Yield stress, Casson, 45°C [Pa] | 110 | 104 | 335 | 270 | 228 | 100 | 270 | 166 | 123 | 90 | 80 | 130 | 110 | 160 | 122 |
| Viscosity after 4 weeks 40°C | 94 | 128 | 99 | 75 | 63 | | 88 | 78 | | 200 | | 80 | 134 | | |
| Factor increase | **1.13** | **1.75** | **1.13** | **1.1** | **1.02** | | **1.1** | **1.3** | | **3.8** | | **1.4** | **1.24** | | |
| Elastic Modulus [MPa] | 2050 | 2000 | 2100 | 2050 | 2040 | 1900 | 1800 | 2040 | 1900 | 1830 | 1900 | 2200 | 2010 | 1930 | 1840 |
| Elongation [%] | 4 | 4 | 4 | 3.9 | 5 | 4 | 5 | 4 | 4 | 5 | 5 | 4 | 4 | 4 | 4 |
| Tensile Strength [MPa] | 35 | 34 | 32 | 35 | 37 | 35 | 33 | 35 | 34 | 35 | 34 | 39 | 36 | 35 | 33 |

| **Lap shear strength** [MPa] | | | | | | | | | | | | | | | |
|---|---|---|---|---|---|---|---|---|---|---|---|---|---|---|---|
| initial | 20.1 | 18.8 | 18.3 | 19.1 | 19 | 20.2 | 19.5 | 19 | 19.1 | 19.1 | 19 | 19.2 | 18.9 | 18.9 | 18.5 |
| After 60 cycles P1210 | 16.2 | 15.3 | 14.8 | 14.5 | 14.1 | 16.3 | 15.3 | 14.6 | 15 | 15.2 | 14.7 | 16.2 | 15.2 | 15.4 | 14.6 |
| Loss % | 19 | 19 | 19 | 24 | 26 | 20 | 22 | 23 | 21 | 20 | 23 | 16 | 20 | 19 | 20 |
| After 90 cycles P1210 | 14.2 | 13.4 | 13.6 | 14 | 12.8 | 14.1 | 14 | 13 | 13 | 13.2 | 13.3 | 13.3 | 12.7 | 13.7 | 12.9 |
| Loss % | **29** | **29** | **26** | **27** | **33** | **30** | **28** | **32** | **32** | **31** | **30** | **31** | **33** | **28** | **30** |
| Impact peel strength at RT [N/mm] | 30 | 29 | 30 | 28 | 29 | 31 | 29 | 27 | 28 | | 29 | 27 | 28 | 27 | 27 |

**Table 5b**

| | **F17** | **F18** | **F19** | **FA** | **FB** | **FC** | **FD** |
|---|---|---|---|---|---|---|---|
| **Initial rheological data** | | | | | | | |
| Viscosity, Casson, 45°C [Pas] | 104 | 47 | 110 | 40 | 68 | 58 | 24 |
| Yield stress, Casson, 45°C [Pa] | 108 | 170 | 73 | 315 | 320 | 222 | 360 |
| Viscosity after 4 weeks 40°C | 112 | 63 | 133 | 50 | 78 | 185 | 37 |
| Factor increase | **1.08** | **1.34** | **1.21** | **1.25** | **1.15** | **3.19** | **1.54** |
| Elastic Modulus [MPa] | | | 1900 | | | 2060 | 2100 |
| Elongation [%] | | | 4 | | | 4 | 5 |
| Tensile Strength [MPa] | | | 36 | | | 38 | 38 |

| **Lap shear strength** [MPa] | | | | | | | |
|---|---|---|---|---|---|---|---|
| Initial | 19 | 19.4 | 18.8 | 18.1 | 18.4 | 18.1 | 18.6 |
| After 60 cycles P1210 | 15.7 | 14.9 | 14.9 | 12.5 | 13 | 13.6 | 14.1 |
| Loss % | 17 | 23 | 21 | 30 | 30 | 26 | 24 |
| After 90 cycles P1210 | 13.1 | 13.2 | 13.1 | 10.4 | 11.1 | 13.4 | 11.2 |
| Loss % | **31** | **32** | **30** | **43** | **40** | **25** | **40** |
| Impact peel strength at RT [N/mm] | 27 | 26 | 28 | 28 | 28 | 29 | 29 |

The inventive formulations show significantly better corrosion performance (less strength loss) than the reference formulations which use no co-toughener beside the blocked PU toughener (FIII).

All inventive tougheners show very good storage stability (little viscosity increase) and much better compared to FIII which uses a CTBN-epoxy adduct as co-toughener and a Bis A blocked toughener.

Elastic Moduli are high (> 1900 MPa) for the inventive formulations. Toughener that use IPDI over HDI as building block show higher elastic moduli (compare F6 and F7 to F1-F5). An exception appears to be formulation F10 which uses DOA-blocked inventive toughener. Secondary-amine capping compound DIPA establishes slightly lower moduli.

The curing accelerator seems to have no or little effect on the performance

No auxiliary toughening or flexibilizer is needed to achieve good impact performance when using the inventive tougheners.

All inventive adhesive formulations show a very good storage stability (small viscosity increase over time in dependence of temperature). Reference formulation FIII shows an unacceptable stability which can be explained by the toughener composition and the use of the Bis A as capping group.

## Claims

1. A composition suitable as a toughener in an epoxy adhesive, the composition comprising a material having the general formula:
R-(DI-PP₁-DI-BP-DI-PP₂-DI-CG)*ₙ* (A)
where:
PP₁ and PP₂ are residues of diols obtained from a mixture comprising polytetramethylene ether glycol (PTMEG) and polybutadiene-diol (PBD), the PBD in the mixture being 5 wt% to 35 wt% relative to PTMEG and PBD;
DI is a residue of an aliphatic diisocyanate;
BP is a residue of a bisphenol;
CG is a residue of a capping group;
*n*=1-6; and
if *n*=1, then R is the CG, and if *n*=2-6, then R is a residue of a polyol with *n* hydroxy groups;
the material comprising a component of formula (A) in which PP₁ and PP₂ are not the same.

2. The composition of any of the above claims wherein the aliphatic diisocyanate comprises at least one of isophorone diisocyanate (IPDI) and hexamethylene diisocyanate (HDI).

3. The composition of any of the above claims wherein the bisphenol comprises at least one of bisphenol A, bisphenol M, and o,o'-diallylbisphenol A.

4. The composition of any of the above claims wherein the capping group comprises at least one of phenolic lipid, trimethylolpropane diglycidylether, an aliphatic secondary amine, and an oxime.

5. The composition of any of the above claims, where *n*=3 and R comprises a residue of trimethylolpropane.

6. An adhesive composition comprising the composition of any of claims 1 through 5, and further comprising an epoxy resin, and a hardener.

7. The adhesive composition of claim 6, further comprising at least one of a gelling agent, a curing accelerator, and a filler.

8. The adhesive composition of claim 7, comprising a filler comprising at least one of fumed silica, calcium carbonate, calcium oxide, wollastonite, talc, glass beads, and hollow glass spheres.

9. A method of manufacturing a composition suitable as a toughener in an epoxy adhesive, the method comprising:
a) obtaining a first composition comprising PTMEG and PBD, the PBD being 5wt%-35wt% relative to PTMEG and PBD;
b) preparing a second composition by reacting the first composition with an aliphatic diisocyanate in the presence of a catalyst;
c) preparing a third composition by reacting the second composition with a bisphenol; and
d) preparing a fourth composition by reacting the third composition with a first capping group.

10. The method of claim 9, further comprising
e) preparing a fifth composition by reacting the fourth composition with a second capping group; and
f) optionally preparing a sixth composition by reacting the fifth composition with a third capping group.

11. The method of claim 9 or 10 wherein the first composition further comprises trimethylolpropane.

12. A toughener prepared by the method of any of claims 9 to 11.

## Patentansprüche

1. Zusammensetzung, geeignet als Schlagfestmacher in einem Epoxidklebstoff, wobei die Zusammensetzung ein Material umfasst, welches folgende allgemeine Formel aufweist:
R-(DI-PP₁-DI-BP-DI-PP₂-DI-CG)*ₙ* (A)
wobei:
PP₁ und PP₂ Rückstände von Diolen sind, welche aus einer Mischung erzielt werden, die Polytetramethylenetherglykol (PTMEG) und Polybutadiendiol (PBD) umfasst, wobei das PBD in der Mischung 5 Gewichtsprozent bis 35 Gewichtsprozent in Bezug auf PTMEG und PBD beträgt;
DI ein Rückstand eines aliphatischen Diisocyanats ist;
BP ein Rückstand eines Bisphenols ist;
CG ein Rückstand einer Endgruppe ist;
*n*=1-6; und
wenn *n*=*1,* R das CG ist, und wenn *n*=2-6, R ein Rückstand eines Polyols mit *n* Hydroxylgruppen ist;
wobei das Material eine Komponente der Formel (A) umfasst, wobei PP₁ und PP₂ unterschiedlich sind.

2. Zusammensetzung nach einem der obigen Ansprüche, wobei das aliphatische Diisocyanat mindestens eines von Isophorondiisocyanat (IPDI) und Hexamethylendiisocyanat (HDI) umfasst.

3. Zusammensetzung nach einem der obigen Ansprüche, wobei das Bisphenol mindestens eines von Bisphenol A, Bisphenol M und o,o'-Diallylbisphenol A umfasst.

4. Zusammensetzung nach einem der obigen Ansprüche, wobei die Endgruppe mindestens eines von Phenollipid, Trimethylolpropandiglycidylether, einem aliphatischen sekundären Amin und einem Oxim umfasst.

5. Zusammensetzung nach einem der obigen Ansprüche, wobei *n*=3 und R einen Rückstand von Trimethylolpropan umfasst.

6. Klebstoffzusammensetzung, die die Zusammensetzung nach einem der Ansprüche 1 bis 5 umfasst, und ferner ein Epoxidharz und einen Härter umfasst.

7. Klebstoffzusammensetzung nach Anspruch 6, die ferner mindestens eines von einem Geliermittel, einem Härtungsbeschleuniger und einem Füller umfasst.

8. Klebstoffzusammensetzung nach Anspruch 7, die einen Füller umfasst, welcher mindestens eines von pyrogener Kieselsäure, Kalziumcarbonat, Kalziumoxid, Wollastonit, Talkum, Glasperlen und hohlen Glaskugeln umfasst.

9. Verfahren zum Herstellen einer als Schlagfestmacher in einem Epoxidklebstoff geeigneten Zusammensetzung, wobei das Verfahren Folgendes umfasst:
a) Erzielen einer ersten Zusammensetzung, die PTMEG und PBD umfasst, wobei das PBD 5 Gewichtsprozent bis 35 Gewichtsprozent in Bezug auf PTMEG und PBD beträgt;
b) Vorbereiten einer zweiten Zusammensetzung durch Reagieren der ersten Zusammensetzung mit einem aliphatischen Diisocyanat in Gegenwart eines Katalysators;
c) Vorbereiten einer dritten Zusammensetzung durch Reagieren der zweiten Zusammensetzung mit einem Bisphenol; und
d) Vorbereiten einer vierten Zusammensetzung durch Reagieren der dritten Zusammensetzung mit einer ersten Endgruppe.

10. Verfahren nach Anspruch 9, ferner umfassend:
e) Vorbereiten einer fünften Zusammensetzung durch Reagieren der vierten Zusammensetzung mit einer zweiten Endgruppe; und
f) wahlweise, Vorbereiten einer sechsten Zusammensetzung durch Reagieren der fünften Zusammensetzung mit einer dritten Endgruppe.

11. Verfahren nach Anspruch 9 oder 10, bei welchem die erste Zusammensetzung ferner Trimethylolpropan umfasst.

12. Schlagfestmacher, vorbereitet anhand des Verfahrens nach einem der Ansprüche 9 bis 11.

## Revendications

1. Composition adaptée à servir d'agent de ténacité dans un adhésif époxy, la composition comprenant une matière correspondant à la formule générale :
R-(DI-PP₁-DI-BP-DI-PP₂-DI-CG)*ₙ* (A)
dans laquelle :
PP₁ et PP₂ représentent des restes de diols obtenus à partir d'un mélange comprenant le polytétraméthylène éther glycol (PTMEG) et le polybutadiène-diol (PBD), la teneur en PBD du mélange étant de 5 % en poids à 35 % en poids par rapport au total de PTMEG et PBD,
DI représente un reste d'un diisocyanate aliphatique,
BP représente un reste d'un bisphénol,
CG représente un reste d'un groupe coiffant,
*n* = 1-6, et
si *n* = 1, alors R représente le CG, et si n = 2-6 alors R représente un reste d'un polyol à *n* groupes hydroxy ;
la matière comprenant un composant de formule (A) dans laquelle PP₁ et PP₂ ne sont pas identiques.

2. Composition selon l'une quelconque des revendications précédentes, dans laquelle le diisocyanate aliphatique comprend l'un parmi l'isophorone diisocyanate (IPDI) et l'hexaméthylène diisocyanate (HDI).

3. Composition selon l'une quelconque des revendications précédentes, dans laquelle le bisphénol comprend au moins l'un parmi le bisphénol A, le bisphénol M et le o,o'-diallylbisphénol A.

4. Composition selon l'une quelconque des revendications précédentes, dans laquelle le groupe coiffant comprend au moins l'un parmi le lipide phénolique, l'éther diglycidylique de triméthylolpropane, une amine secondaire aliphatique et une oxime.

5. Composition selon l'une quelconque des revendications précédentes, dans laquelle *n* = 3 et R comprend un reste de triméthylolpropane.

6. Composition d'adhésif comprenant la composition selon l'une quelconque des revendications 1 à 5, et comprenant en outre une résine époxy et un durcisseur.

7. Composition d'adhésif selon la revendication 6, comprenant en outre au moins l'un parmi un agent gélifiant, un accélérateur de durcissement et une charge.

8. Composition d'adhésif selon la revendication 7, comprenant une charge qui comprend au moins l'un parmi la silice sublimée, le carbonate de calcium, l'oxyde de calcium, la wollastonite, le talc, les billes de verre et les sphères creuses de verre.

9. Procédé de production d'une composition adaptée à servir d'agent de ténacité dans un adhésif époxy, le procédé comprenant :
a) l'obtention d'une première composition comprenant du PTMEG et du PBD, la teneur en PBD étant de 5 % en poids à 35 % en poids par rapport au total de PTMEG et PBD,
b) la préparation d'une deuxième composition en faisant réagir la première composition avec un diisocyanate aliphatique en présence d'un catalyseur,
c) la préparation d'une troisième composition en faisant réagir la deuxième composition avec un bisphénol, et
d) la préparation d'une quatrième composition en faisant réagir la troisième composition avec un premier groupe coiffant.

10. Procédé selon la revendication 9, comprenant en outre :
e) la préparation d'une cinquième composition en faisant réagir la quatrième composition avec un deuxième groupe coiffant, et
f) facultativement la préparation d'une sixième composition en faisant réagir la cinquième composition avec un troisième groupe coiffant.

11. Procédé selon la revendication 9 ou 10, dans lequel la première composition comprend en outre du triméthylolpropane.

12. Agent de ténacité préparé suivant le procédé selon l'une quelconque des revendications 9 à 11.
